# EUROPEAN PATENT SPECIFICATION

(11) **EP 1 707 439 B1**
(45) Date of publication and mention of the grant of the patent: **02.01.2008**
(21) Application number: 06111331.2
(22) Date of filing: 31.03.2006
(51) Int. Cl.: B60R 9/04

(54) **Ladder rack for vehicles**
Dachträger für Fahrzeuge
Support d'échelle pour véhicule

(30) Priority: 01.04.2005 IT TO20050213
(43) Date of publication of application: 04.10.2006
(73) Proprietor: LA PREALPINA SRL, 10040 Volvera TO (IT)
(72) Inventor: TASCHERO, GIUSEPPE, 10040, VOLVERA (TO) (IT)
(74) Representative: Dini, Roberto

(56) References cited:
- EP-A- 1 104 718
- US-A- 5 884 824
- US-A1- 2003 052 145
- PATENT ABSTRACTS OF JAPAN vol. 008, no. 262 (M-341), 30 November 1984 (1984-11-30) & JP 59 134026 A (NISSAN JIDOSHA KK), 1 August 1984 (1984-08-01)

## Description

The present invention relates to a ladder rack for vehicles.

More in particular, the present invention relates to a ladder rack for vehicles made in such a way as to allow to fully open the tailgate of the vehicle on which the ladder rack is mounted, without requiring the removal of a ladder housed on the ladder rack.

As known, many typologies of workers, such as craftsmen, workmen or even simple do-it-yourself enthusiasts, need to use ladders or other large objects in order to be able to carry out their work or hobby, and they often have to transport them to different places using a vehicle.

To this end, various types of ladder racks or generalized load carriers to be fastened to the roof of a vehicle are known, which allow anyone to easily transport a ladder or another bulky object on a vehicle.

However, some types of activities do not necessarily require the use of the ladder or other bulky object loaded on the vehicle, whereas the worker may need to be able to access the rear internal compartment of the vehicle in order to pick up tools or anything that might be useful for his activity.

When the ladder or other bulky object is housed on the roof of a vehicle, it may protrude beyond the length of the vehicle itself, thereby preventing the tailgate from being opened completely.

Various types of ladder racks for vehicles have been proposed which are made in such a way as to not interfere with the opening of the tailgate of the vehicle.

For example, the US patent US 5,884,824 describes a ladder rack to be fastened to the roof of a vehicle, wherein the ladder is loaded or unloaded laterally relative to the vehicle.

However, such a solution prevents from accessing the inside compartment of the vehicle from the side on which the ladder is loaded or unloaded, thus creating interference with one or more side doors of the vehicle.

This can be most disadvantageous when, with the ladder rack lowered, it is necessary to get into the vehicle from the side encumbered by the ladder rack or to get out of the vehicle from the obstructed side.

Moreover, a malfunctioning of the device described in the above-mentioned US patent may cause damage by scraping to the vehicle body.

Object of the present invention is therefore to provide a ladder rack for vehicles which allows to fully open the tailgate of a vehicle without interfering with any other door of the vehicle itself.

A further object of the invention is to provide a ladder rack for vehicles which can be adapted to most vehicles, in particular those for commercial use.

A further object of the invention is to provide a ladder rack for vehicles wherein the movements of the user of the ladder rack are minimized, thereby increasing the user's efficiency in terms of time.

Thanks to the particular realization of the ladder rack according to the invention, the user can load/unload a ladder or another bulky object from a vehicle and/or pick up material from within the vehicle through the tailgate while remaining at the rear of the vehicle and without having to move sideways.

These and other objects are achieved by the ladder rack for vehicles according to the invention, as claimed in the annexed claims.

The invention will now be described in detail with particular reference to the annexed drawings, supplied by way of non-limiting example, wherein:
- Figs. 1a and 1b show a schematic side view of a ladder rack according to the invention applied to a vehicle in the horizontal and tilted positions, respectively;
- Figs. 2 and 3 show a top view of a rear portion and a rear view of the ladder rack of Fig. 1, respectively.

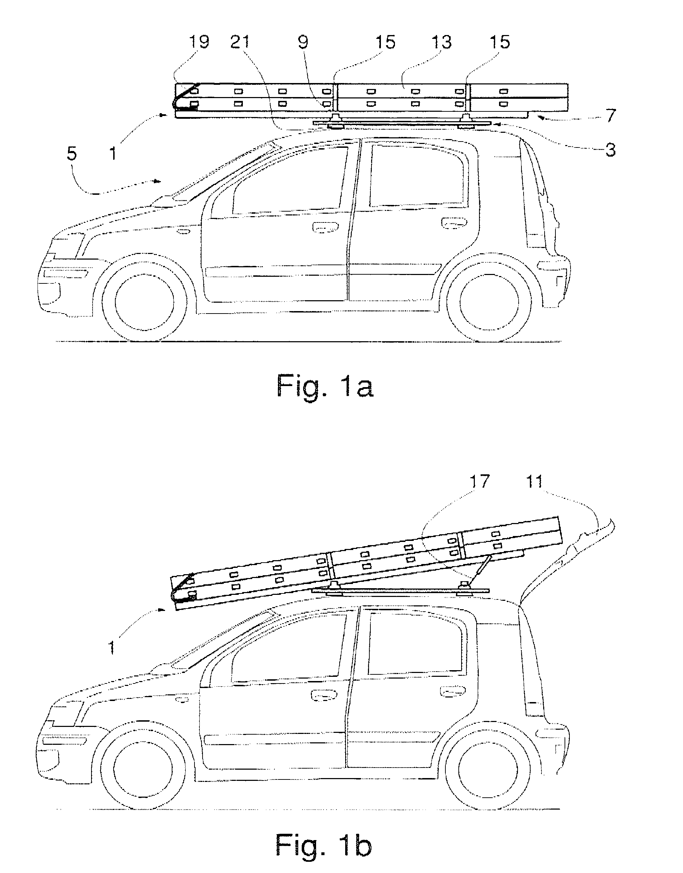

Figs. 1a and 1b schematically illustrate a ladder rack 1 according to the invention, consisting of a fixed frame 3 to be fastened to the roof of a vehicle 5, and a movable support 7, which is pivoted in front to a portion 9 of the fixed frame 3.

The front coupling between the fixed frame 3 and the movable support 7 of the ladder rack 1 is accomplished by means of silent blocks, not shown. In the rest position, shown in Fig. 1a, the fixed frame 3 and the movable support 7 are substantially parallel, whereas in the tilted position, shown in Fig. 1b, the movable support 7 can be lifted relative to the fixed frame 3, preferably by about 15°.

The fixed frame 3 is supported by four support elements 21 arranged in such a way as to form the corners of a quadrilateral, preferably a rectangle, and fastened to the roof of the vehicle 5 in a known way.

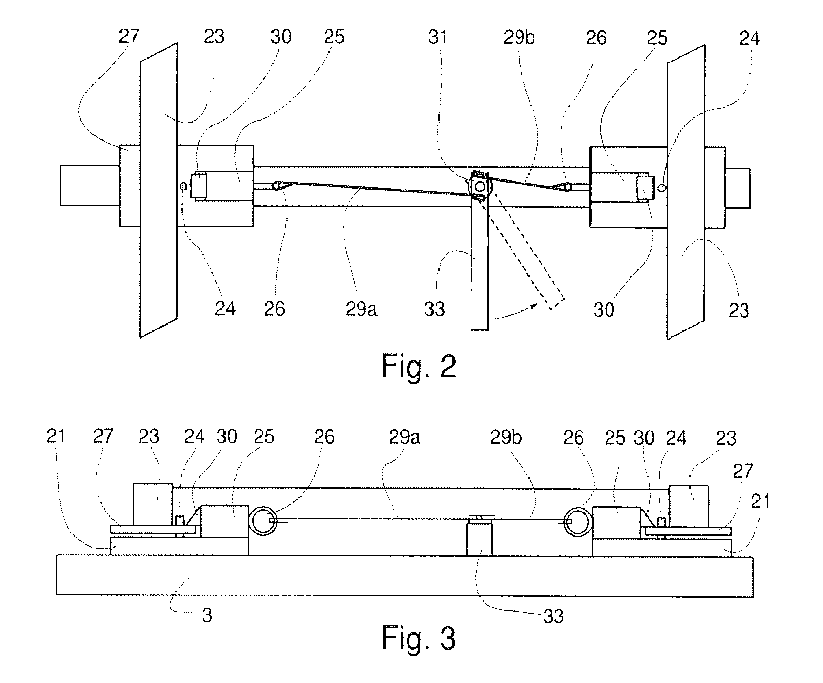

A ladder 13, or another bulky object which may be housed in the ladder rack 1, is housed on parallel longitudinal guides 23, or side members, of the movable support 7, as shown in Fig. 2.

Thanks to suitable actuation means, which will be described later, a user can easily lift the movable support 7 of the ladder rack 1 relative to the fixed frame 3, thereby allowing the tailgate 11 of the vehicle 5 to be fully opened.

The lifting of the movable support 7 relative to the fixed frame 3 is obtained through suitable lifting means 17 which counteract the weight of the objects resting on the frame.

The lifting means 17 are connected on one end to the fixed frame 3 of the ladder rack 1 and on the other end to the movable support 7 of the ladder rack 1.

The lifting means 17 may consist of springs, gas springs, pistons, gas pistons, or other equivalent mechanical items.

The ladder 13 is retained laterally by side retention means 15, e.g. belts, and in front by stops 19, consisting of tubular elements bent toward the rear of the vehicle 5, which prevent the ladder 13 from sliding toward the front of the vehicle 5 when the actuation means are actuated without the ladder 13 being retained to the ladder rack 1.

The rear portion of the ladder rack 1 according to the invention will now be described more in detail with reference to Figs. 2 and 3.

As illustrated, the rear coupling between the fixed frame 3 and the movable support 7 is accomplished through centering and retention pins 24.

The actuation means of the lifting means 17 comprise two latching members 25, being integral with the fixed support 3 and engaged in flanges 27, and two respective tie rods 29a ,29b being latched on one side to the respective latching members 25 through respective rings 26 and on the other side to a cylinder 31.

The latching members 25 lie on the support element 21 and have respective sliding latching elements 30 which, when the ladder rack 1 is in the lowered position, prevent the movable support 7 from being lifted.

A release lever 33 may take a first rest position, indicated by a continuous line, and a second actuation position, indicated by a dashed line.

Starting from the rest position, when the release lever 33 is turned anticlockwise, the cylinder 31 also turns anticlockwise and acts on the tie rods 29a, 29b, which are thereby withdrawn toward the cylinder 31.

In turn, the tie rods 29a, 29b act on the latching members 25 which, as the sliding latching element 30retracts , it frees the movable support 7 and allows it to be easily lifted through the lifting means 17 with respect to the fixed frame 3.

The operation for lowering the ladder rack 1 to the rest position of Fig. 1a, wherein the movable support 7 is substantially parallel to the fixed frame 3, must be carried out manually.

In order to facilitate the loading and unloading of the ladder, the movable support 7 may be provided with rollers, not shown.

## Claims

1. Ladder rack (1) for vehicles, comprising:
- a fixed frame (3) to be fastened to the roof of a vehicle (5);
- a movable support (7) pivoted in front to a portion (9) of said fixed frame (3), and comprising two parallel longitudinal guides (23) for housing a ladder (13) or another bulky object,
**characterized in that**
it comprises lifting means (17) having one end connected to said fixed frame (3) and the other end connected to said movable support (7), said ladder rack (1) being able to take a first position wherein said fixed frame (3) and said movable support (7) are substantially parallel and a second position wherein said movable support (7) is lifted upward with respect to said fixed frame (3) through said lifting means (17), so as to allow a tailgate (11) of said vehicle (5), on which roof said ladder rack (1) is mounted, to be opened completely.

2. Ladder rack (1) according to claim 1, **characterized in that** said fixed frame (3) and said movable support (7) are pivoted in front by means of silent blocks, so as to allow said movable support (7) to turn approximately 15° relative to said fixed frame (3), and are coupled on the rear through centering pins (24).

3. Ladder rack (1) according to claim 1 or 2, **characterized in that** said ladder rack (1) also comprises actuation means (25,29a,29b,33) adapted to move said ladder rack (1) to said first or said second position.

4. Ladder rack (1) according to claim 3, **characterized in that** said actuation means (25,29a,29b,33) comprise a release lever (33).

5. Ladder rack according to claim 4, **characterized in that** said actuation means (25,29a,29b,33) also comprise two latching members (25) and two respective tie rods (29a,20b) being latched on one side to the respective latching members (25) and on the other side to a cylinder (31), said cylinder (31) being acted upon by said release lever (33) which, by turning said cylinder (31) anticlockwise, withdraws said tie rods (29a,29b) toward it so as to allow said movable support (7) to be lifted with respect to said fixed frame (3).

6. Ladder rack (1) according to claim 5, **characterized in that** said latching members (25) have a latching element (30) which can slide on a flange (27) on which, in said first position, lie said parallel longitudinal guides (23).

7. Ladder rack (1) according to one or more previous claims, **characterized in that** said fixed frame (3) is fastened to the roof of said vehicle (5) by means of four support elements (21), substantially arranged in such a way as to form the corners of a quadrilateral, so as to support said fixed frame (3).

8. Ladder rack (1) according to one or more previous claims, **characterized in that** it comprises side retention means (15), preferably consisting of belts.

9. Ladder rack (1) according to one or more previous claims, **characterized in that** it comprises of front stops (19), preferably consisting of tubular elements bent toward the rear of said vehicle (5), which prevent said ladder (13) from sliding toward the front of said vehicle (5) when said actuation means (25,29a,29b,33) are actuated without said ladder (13) being retained to said ladder rack (1).

10. Ladder rack (1) according to one or more previous claims, **characterized in that** said lifting means (17) are springs, gas springs, pistons, gas pistons, or other equivalent mechanical items.

11. Ladder rack (1) according to one of the previous claims, wherein said movable support (7) comprises rollers for facilitating the loading and unloading of said ladder (13) from said support (7).

## Patentansprüche

1. Leitergestell (1) für Fahrzeuge, mit
- einem feststehenden Rahmen (3), der am Dach eines Fahrzeugs (5) zu befestigen ist,
- einem beweglichen Träger (7), der vorne an einem Abschnitt (9) des feststehenden Rahmens (3) verschwenkbar angebracht ist und zwei parallele Längsführungen (23) zur Aufnahme einer Leiter (13) oder eines anderen sperrigen Objektes umfasst,
**dadurch gekennzeichnet, dass**
das Leitergestell Hebemittel (17) umfasst, deren eines Ende mit dem feststehenden Rahmen (3) und deren anderes Ende mit dem beweglichen Träger (7) verbunden ist, wobei das Leitergestell (1) eine erste Position, in welcher der feststehende Rahmen (3) und der bewegliche Träger (7) im wesentlichen parallel zueinander verlaufen, und eine zweite Position einnehmen kann, in welcher der bewegliche Träger (7) relativ zum feststehenden Rahmen (3) durch die Hebemittel (17) nach oben angehoben ist, so dass eine Heckklappe (11) des Fahrzeugs (5), auf dessen Dach das Leitergestell (1) montiert ist, vollständig geöffnet werden kann.

2. Leitergestell (1) nach Anspruch 1, **dadurch gekennzeichnet, dass** der feststehende Rahmen (3) und der bewegliche Träger (7) vorne mittels Silentblöcken verschwenkbar angebracht sind, so dass der bewegliche Träger (7) um etwa 15° relativ zum feststehenden Rahmen (3) gedreht werden kann, und hinten mittels Zentrierstiften (24) angekoppelt sind.

3. Leitergestell (1) nach Anspruch 1 oder 2, **dadurch gekennzeichnet, dass** das Leitergestell (1) auch Betätigungsmittel (25, 29a, 29b, 33) umfasst, die dazu eingerichtet sind, das Leitergestell (1) in die erste oder zweite Position zu bewegen.

4. Leitergestell (1) nach Anspruch 3, **dadurch gekennzeichnet, dass** die Betätigungsmittel (25, 29a, 29b, 33) einen Auslösehebel (33) umfassen.

5. Leitergestell (1) nach Anspruch 4, **dadurch gekennzeichnet, dass** die Betätigungsmittel (25, 29a, 29b, 33) auch zwei Rastteile (25) und zwei entsprechende Zugstangen (29a, 29b) umfassen, die auf einer Seite mit den entsprechenden Rastteilen (25) und auf der anderen Seite mit einem Zylinder (31) verrastet sind, wobei der Zylinder (31) von dem Auslösehebel (33) beaufschlagt wird, der durch Drehen des Zylinders (31) gegen den Uhrzeigersinn die Zugstangen (29a, 29b) zu diesem hin zurückzieht, so dass der bewegliche Träger (7) relativ zum feststehenden Rahmen (3) angehoben werden kann.

6. Leitergestell (1) nach Anspruch 5, **dadurch gekennzeichnet, dass** die Rastteile (25) ein Rastelement (30) aufweisen, das auf einem Flansch (27) gleiten kann, auf dem in der ersten Position die parallelen Längsführungen (23) liegen.

7. Leitergestell (1) nach einem oder mehreren vorhergehenden Ansprüchen, **dadurch gekennzeichnet, dass** der feststehende Rahmen (3) am Dach des Fahrzeugs (5) mittels vier Stützelementen (21) befestigt ist, die im wesentlichen so angeordnet sind, dass sie die Ecken eines Vierecks bilden, um den feststehenden Rahmen (3) abzustützen.

8. Leitergestell (1) nach einem oder mehreren vorhergehenden Ansprüchen, **dadurch gekennzeichnet, dass** es seitliche Rückhaltemittel (15) umfasst, die vorzugsweise aus Gurten bestehen.

9. Leitergestell (1) nach einem oder mehreren vorhergehenden Ansprüchen, **dadurch gekennzeichnet, dass** es vordere Anschläge (19) umfasst, die vorzugsweise aus rohrförmigen, zum Heck des Fahrzeugs (5) hin gebogenen Elementen bestehen und verhindern, dass die Leiter (13) zur Front des Fahrzeugs (5) hin gleiten, wenn die Betätigungsmittel (25, 29a, 29b, 33) bei nicht am Leitergestell (1) gehalterter Leiter (13) betätigt werden.

10. Leitergestell (1) nach einem oder mehreren vorhergehenden Ansprüchen, **dadurch gekennzeichnet, dass** die Hebemittel (17) Federn, Gasfedern, Kolben, Gaskolben oder andere, äquivalente mechanische Objekte sind.

11. Leitergestell (1) nach einem der vorhergehenden Ansprüche, wobei der bewegliche Träger (7) Rollen umfasst, um das Auf- und Abladen der Leiter (13) auf den/vom Träger (7) zu erleichtern.

## Revendications

1. Support d'échelle (1) destiné à des véhicules, comportant :
- un châssis fixe (3) devant être fixé sur le toit d'un véhicule (5),
- un support mobile (7), pivoté en avant d'une partie (9) dudit châssis fixe (3), et comportant deux guides longitudinaux parallèles (23) pour recevoir une échelle (13) ou un autre objet encombrant,
**caractérisé en ce que**
il comporte des moyens de levage (17) ayant une première extrémité reliée audit châssis fixe (3) et l'autre extrémité reliée audit support mobile (7), ledit support d'échelle (1) étant apte à prendre une première position dans laquelle ledit châssis fixe (3) et ledit support mobile (7) sont sensiblement parallèles, et une seconde position dans laquelle ledit support mobile (7) est levé vers le haut par rapport audit châssis fixe (3) à travers lesdits moyens de levage (17), de manière à permettre à un hayon arrière (11) dudit véhicule (5), sur le toit duquel ledit support d'échelle (1) est monté, d'être ouvert complètement.

2. Support d'échelle (1) selon la revendication 1, **caractérisé en ce que** ledit châssis fixe (3) et ledit support mobile (7) sont pivotés vers l'avant par l'intermédiaire de blocs élastiques, de manière à permettre audit support mobile (7) de tourner sur approximativement 15 ° par rapport audit châssis fixe (3), et sont couplés sur l'arrière par l'intermédiaire de broches de centrage (24).

3. Support d'échelle (1) selon la revendication 1 ou 2, **caractérisé en ce que** ledit support d'échelle (1) comporte également des moyens d'actionnement (25, 29a, 29b, 33) adaptés pour déplacer ledit support d'échelle (1) vers ladite première position ou ladite seconde position.

4. Support d'échelle (1) selon la revendication 3, **caractérisé en ce que** lesdits moyens d'actionnement (25, 29a, 29b, 33) comportent un levier de libération (33).

5. Support d'échelle selon la revendication 4, **caractérisé en ce que** lesdits moyens d'actionnement (25, 29a, 29b, 33) comportent également deux organes de verrouillage (25) et deux tiges de liaison respectives (29a, 29b) étant verrouillées sur un premier côté aux organes de verrouillage respectifs (25), et sur l'autre côté à un vérin (31), ledit vérin (31) subissant l'action exercée par ledit levier de libération (33) qui, en tournant ledit vérin (31) dans le sens inverse des aiguilles d'une montre, retire lesdites tiges de liaison (29a, 29b) vers celui-ci de manière à permettre audit support mobile (7) d'être levé par rapport audit châssis fixe (3).

6. Support d'échelle (1) selon la revendication 5, **caractérisé en ce que** lesdits organes de verrouillage (25) ont un élément de verrouillage (30) qui peut coulisser sur une bride (27) sur laquelle, dans ladite première position, s'étendent lesdits guides longitudinaux parallèles (23).

7. Support d'échelle (1) selon l'une quelconque des revendications précédentes, **caractérisé en ce que** ledit châssis fixe (3) est fixé sur le toit dudit véhicule (5) par l'intermédiaire de quatre éléments de support (21), agencés sensiblement de manière à former les coins d'un quadrilatère, de manière à supporter ledit châssis fixe (3).

8. Support d'échelle (1) selon l'une quelconque des revendications précédentes, **caractérisé en ce qu'**il comporte des moyens de retenue latéraux (15), constitués de préférence de sangles.

9. Support d'échelle (1) selon l'une quelconque des revendications précédentes, **caractérisé en ce qu'**il comporte des butées avant (19), constituées de préférence d'éléments tubulaires incurvés vers l'arrière dudit véhicule (5), qui empêchent ladite échelle (3) de glisser vers l'avant dudit véhicule (5) lorsque lesdits moyens d'actionnement (25, 29a, 29b, 33) sont actionnés sans que ladite échelle (13) ne soit retenue sur ledit support d'échelle (1).

10. Support d'échelle (1) selon l'une quelconque des revendications précédentes, **caractérisé en ce que** lesdits moyens de levage (17) sont des ressorts, des ressorts à gaz, des pistons, des pistons à gaz ou d'autres éléments mécaniques équivalents.

11. Support d'échelle (1) selon l'une quelconque des revendications précédentes, dans lequel ledit support mobile (7) comporte des galets pour faciliter le chargement et le déchargement de ladite échelle (13) à partir dudit support (7).
